# EUROPÄISCHE PATENTSCHRIFT

(11) **EP 0 879 830 B1**
(45) Veröffentlichungstag und Bekanntmachung des Hinweises auf die Patenterteilung: **13.11.2002**
(21) Anmeldenummer: 98108392.6
(22) Anmeldetag: 08.05.1998
(51) Int. Cl.: C08F 8/06, C08F 255/02

(54) **Modifizierte Polypropylene verbesserter Verarbeitbarkeit**
Modified polypropylene having improved processability
Polypropylène modifié ayant une mise en oeuvre améliorée

(30) Priorität: 20.05.1997 DE 19720973; 10.06.1997 DE 19724414
(43) Veröffentlichungstag der Anmeldung: 25.11.1998
(73) Patentinhaber: Borealis GmbH, 2323 Schwechat-Mannswörth (AT)
(72) Erfinder: Rätzsch, Manfred, Prof. Dr., 4202 Kirchschlag (AT); Bucka, Hartmut, Dipl. Ing., * (AT); Hesse, Achim, Dr., 4020 Linz (AT); Panzer, Ulf, Dr., 4320 Perg (AT); Reichelt, Norbert, Dr., 4501 Neuhofen (AT)
(74) Vertreter: Schinke, Herbert, Dr. Dr., Patentanwaltskanzlei

(56) Entgegenhaltungen:
- EP-A- 0 002 760
- EP-A- 0 208 353
- WO-A-97/11097
- DE-C- 19 500 426
- FR-A- 1 343 036
- FR-A- 1 538 264
- GB-A- 844 231
- GB-A- 1 019 916
- US-A- 2 828 296
- US-A- 5 578 682

## Beschreibung

Die Erfindung betrifft modifizierte Polypropylene verbesserter Verarbeitbarkeit, die durch Umsetzung von Polypropylen mit ungesättigten Monomeren hergestellt werden.

Im Gegensatz zu Polyethylenen niederer Dichte, die nach dem Hochdruckverfahren hergestellt worden sind, besitzen Polypropylene bei der thermoplastischen Verarbeitung eine Reihe von Nachteilen wie eine erhöhte Instabilität der Schmelze und dem damit verbundenen kleineren Verarbeitungsfenster. Nichtmodifizierte Polypropylene lassen gegenüber Polyethylen nur eine bedeutend niedrigere Verarbeitungsgeschwindigkeit zu.

Bekannte Verfahren zur Verbesserung der Verarbeitbarkeit von Polypropylen sind der Einsatz von Blends aus Polypropylen mit LDPE (DE 32 20 269, WO 94/13460, WO 93/15132), von Blends aus Polypropylen und Mischungen aus LDPE und hydrierten Vinyltoluen-Methylstyren-Copolymeren ( US 43 65 044) , von Blends aus Polypropylen und teilvernetzten Polybutadienen (DE29 37 528), Ethylen-Propylen-Kautschuk ( EP 505 850), Polymethacrylaten (EP 570 221, US 55 06 307), Acrylatgepfropften Polypropylenen ( Cruz, C.A., Proc. Polyolefins VIII Intern. Conference Houston, 523, S.147) oder EVA ( US 43 52 892, GB 14 00 494).

Von Nachteil bei diesen Verfahren ist, daß die günstigen Werkstoffeigenschaften von Polypropylenen wie Wärmeformbeständigkeit, Transparenz und Modul durch den hohen Anteil der Modifizierungskomponenten herabgesetzt werden.

Eine Verbesserung der Verarbeitbarkeit von Polypropylen wird ebenfalls durch Behandlung des Pulvers in fester Phase mit ionisierender Strahlung ( EP 190 889), Peroxiden (EP 384 431) oder Monomer/Peroxid-Mischungen (EP 437 808) bewirkt. Eine Behandlung von Polypropylen-Polyethylen-Schmelzen mit Peroxiden zur Verbesserung der Verarbeitbarkeit (Xanthos, M., Adv.Polym. Techn. 11(1992)4, 295 - 304) ist ebenfalls bekannt.

In jüngster Zeit sind zahlreiche Entwicklungen zur Festphasenmodifizierung von Polyolefinen einschließlich Polypropylen bekannt geworden. Unter Festphasenpfropfung wird das Ankoppeln einer ungesättigten monomeren Verbindung an eine durch Radikalübertragung oder energiereiche Strahlung erzeugte Radikalstelle am Polymermolekül, das bei Temperaturen unterhalb des Schmelzpunkts oder Erweichungspunkts des Polyolefins In fester Phase vorliegt, verstanden. Die Polyolefine liegen dabei In Partikelform, beispielsweise als Pulver oder Granulat, oder als Folie oder Faser vor. Der Vorteil liegt gegenüber der Schmelzemodifizierung vor allem in der niedrigeren Reaktionstemperatur und der damit drastisch verringerten Degradation und gegenüber der Lösungsmodifizierung im Verzicht auf den Einsatz organischer Lösungsmittel sowie deren Entfernung nach dem Modifizierungsschritt.

Der Nachteil der Festphasenmodifizierung gegenüber der Schmelzemodifizierung bzw. Lösungsmodifizierung besteht vor allem darin, daß in fester Phase Reaktionen zwischen den Polymermolekülen, wie sie für die Bildung modifizierter Polymerstrukturen notwendig sind, sehr langsam ablaufen bzw. stark gehindert sind.

Eine Reihe bekannter Verfahren der Festphasenmodifizierung ist durch die Zugabe flüssiger ungesättigter monomerer Verbindungen charakterisiert. So beschreibt DE 41 23 972 ein diskontinuierliches Verfahren zur Herstellung von polarmodifiziertem Polyethylen durch radikalische Kopplung von Carboxylmonomeren und Carboxylmonomergemischen, wobei dem Polyethylen 50 bis 80 Gewichtsteile Carboxylmonomer oder Carboxylmonomergemisch zugesetzt, dieser Ansatz zusammen mit dem Radikalbildner oder Radikalbildnergemisch dispergiert und im Temperaturbereich zwischen 60 und 100°C polymerisiert wird.

In DD 135 622 wird ein Verfahren zur Ankopplung von Styren an polyolefinische Substrate wie Polyethylen, Ethylen-Propylen-Dien-Terpolymere, Ethylen-Vinylacetat-Copolymere, Polypropylen und chloriertes Polyethylen beschrieben, wobei die Umsetzung mit Styren oder Styren-Monomer-Mischungen unterhalb der Monomersättigungsdampfdrücke mit dem trockenen Polymersubstrat oder mit dem Polymersubstrat in Gegenwart von Wasser oder anderen inerten flüssigen Medien erfolgt. DD 135 621 beschreibt unter gleichen Bedingungen die Kopplung von Butadien und Butadien enthaltender Monomermischungen und DD 131 752 die Kopplung von Vinylacetat und Vinylacetat enthaltender Monomermischungen mit den gleichen Polymersubstraten. Bekannt ist ebenfalls der Zusatz von Quellmitteln zur Erhöhung der Ausbeute bei der Modifizierung von Polyolefinpartikeln in fester Phase (EP 0 37o 753).

Die Zugabe flüssiger ungesättigter Monomerer führt in der Regel dazu, daß sich die flüssigen Monomere an den Partikeloberflächen und zwischen den Partikeln konzentrieren. Erfolgt bei einer solch inhomogenen Monomerverteilung die Zersetzung des Radikalbildners, so resultiert daraus eine verstärkte Homopolymerisation des Monomeren auf Kosten der Kopplungsreaktion, d. h. eine Verringerung der Modifizierungseffizienz. Darüber hinaus weisen die so hergestellten Materialien Produktinhomogenitäten auf, die die Gebrauchseigenschaften verschlechtern.

Eine Möglichkeit, diese Nachteile zu reduzieren, wird in EP 0 439 079 aufgezeigt. Es wird ein Verfahren zur Herstellung modifizierter Polyolefincopolymerer beschrieben, bei dem die Radikalbildner und die Monomere jeweils als flüssige Phase, entweder als reine Flüssigkeit oder als flüssige Lösung, zu Polyolefinpartikein zugegeben werden, wobei die Rate der Monomerzugabe klein ist und 4,5 pph/min nicht übersteigt. Die Monomerzugabe erfolgt entweder unmittelbar, nachdem die gesamte Radikalbildnermenge den auf einer für den Zerfall des Initiators erforderlichen Temperatur befindlichen Polyolefinpartikeln zugesetzt wurde, oder gleichzeitig mit der Radikalbildnerzugabe, oder als Kombination dieser beiden genannten Verfahren mit zeitlicher Überlappung von Radikalbildner - bzw. Monomerzugabe. Die bereits dargestellten wesentlichen Nachteile einer inhomogenen Verteilung von Monomeren und von modifizierten Bereichen treten jedoch auch bei diesem Verfahren auf.

In EP 0 190 889 wird die Festphasenmodifizierung von Polypropylen zur Herstellung von verzweigtem Polypropylen unter Einsatz ionisierender Strahlung beschrieben. Der Nachteil dieses Verfahrens besteht unter anderem darin, daß zur Desaktivierung der Radikale in der festen Phase eine zusätzliche Reaktionszeit von 10 min bis 120 min (abhängig von der Temperatur) erforderlich ist.

Die Aufgabe für die vorliegende Erfindung bestand in der Entwicklung von modifizierten Polypropylenen verbesserter Verarbeitbarkeit unter Erhalt der Festigkeitseigenschaften des Polypropylens, die nach einem Verfahren hergestellt worden sind, das die aufgeführten Nachteile bekannter Verfahren vermeidet.

Gegenstand der vorliegenden Erfindung sind demnach modifizierte Propylen-Homopolymere und/oder modifizierte Propylen-Copolymere verbesserter Verarbeitbarkeit aus Propylen-Homopolymeren mit Schmelzindices von 0,05 bis 35 g/10 min bei 230°C/2,16kp und/oder Copolymeren aus 85,0 bis 99,9 Masse% Propylen und 0,1 bis 15,0 Masse% α-Olefinen mit 2 bzw. 4 bis 18 C-Atomen mit Schmelzindices von 0,05 bis 45 g/10 min bei 230°C/2,16 kp und ethylenisch mehrfunktionell ungesättigten Monomeren, wobei die modifizierten Propylen-Homopolymere und/oder modifizierten Propylen-Copolymere nach einem kontinuierlichen Verfahren hergestellt worden sind, bei dem partikelförmige Propylen-Homopolymere und/oder partikelförmige Propylen-Copolymere in Form von Pulvern, Granulaten oder Grießen mit Korngrößen im Bereich von 0,001 bis 7 mm, bevorzugt 0,05 bis 4 mm, gegebenenfalls unter Zusatz von 0,05 bis 3 Masse%, bezogen auf die eingesetzten Propylen-Homopolymere und/oder Propylen-Copolymere, an Acylperoxiden, Alkylperoxiden, Hydroperoxiden, Peroxycarbonaten und/oder Perestern als thermisch zerfallende Radikalbildner, mit einem Gasgemisch, das aus 5 bis 65 Vol% leichtflüchtigen, ethylenisch mehrfunktionell ungesättigten Monomeren, bevorzugt C₄- bis C₁₀- Dienen und/oder C₇- bis C₁₀- Divinylverbindungen, und 95 bis 35 Vol% Inertgas oder Sauerstoff oder Inertgas-Sauerstoff-Mischungen in beliebigen Mischungsverhältnissen besteht, umgesetzt worden sind, wobei
a) die partikelförmigen Propylen-Homopolymere und/oder partikelförmigen Propylen-Copolymere in einem kontinuierlichen Mischer, gegebenenfalls unter Zusatz thermisch zerfallender Radikalbildner, mit dem Gasgemisch bei einer Temperatur von 20°C bis 120°C, vorzugsweise von 60 bis 100°C, und einer mittleren Verweilzeit von 10s bis 1000 s, bevorzugt 60 s bis 600 s, in fester Phase behandelt worden sind, wobei in den partikelförmigen Propylen-Homopolymeren und/oder partikelförmigen Propylen-Copolymeren der sorbierte Anteil der ethylenisch mehrfunktionell ungesättigten Monomeren 0,01 bis 10 Masse%, bevorzugt 0,05 bis 2 Masse%, bezogen auf die eingesetzten partikelförmigen Propylen-Homopolymere und/oder partikelförmigen Propylen-Copolymere, beträgt,
b) die partikelförmigen Propylen-Homopolymere und/oder partikelförmigen Propylen-Copolymere, in denen die leichtflüchtigen, ethylenisch mehrfunktionell ungesättigten Monomere sorbiert sind, unter einer Atmosphäre aus diesem Gasgemisch bei 110°C bis 210°C bei einer Verweilzeit von 0,3 bis 8,0 min aufgeschmolzen worden sind,
c) die Schmelze danach auf 220°C bis 300°C bei einer Verweilzeit von 0,3 bis 7,0 min erwärmt worden ist, wobei nicht-umgesetzte leichtflüchtige, ethylenisch mehrfunktionell ungesättigte Monomere und Zerfallsprodukte entfernt worden sind, und
d) die Schmelze In an sich bekannter Weise granuliert worden ist,
und wobei vor dem Verfahrensschritt a) und/oder d) und/oder vor bzw. während des Verfahrensschrittes c) als weitere Zusatzstoffe 0,01 bis 2,5 Masse% Stabilisatoren, 0,1 bis 1 Masse% Antistatika, 0,2 bis 3 Masse% Pigmente , 0,05 bis 1 Masse% Nukleierungsmittel, 5 bis 40 Masse% Füll- und/oder Verstärkerstoffe , 2 bis 20 Masse% Flammschutzmittel und/oder 0,01 bis 5 Masse% Verarbeitungshilfsmittel, bezogen auf das eingesetzte Propylen-Homopolymer und/oder Propylen-Copolymer, gegebenenfalls zugesetzt worden sind.

Besonders bevorzugt werden Polypropylen - Homopolymere, statistische Propylen-Copolymere, Propylen-Blockcopolymere, statistische Propylen-Blockcopolymere und elastomere Polypropylene.

Eine besondere Eignung für die Herstellung von Polypropylenen mit verbesserter Verarbeitbarkeit besitzen Polypropylene mit bimodaler Molmassenverteilung, die in einer Reaktorkaskade unter Einsatz von Ziegler-Natta-Katalysatoren oder Metallocenkatalysatoren hergestellt wurden, und Molmassen-Gewichtsmittel M_{w} von 500000 bis 1500000 g/mol, Molmassen-Zahlenmittel Mₙ von 25000 bis 100000 g/mol und M_{w} / Mₙ -Werte von 5 bis 60, bevorzugt Molmassen-Gewichtsmittel M_{w} von 600000 bis 1000000 g/mol, Molmassen-Zahlenmittel Mₙ von 30000 bis 100000 g/mol und M_{w} / Mₙ -Werte von 15 bis 35 besitzen.

Bevorzugt werden Peroxide und Gasgemische aus ethylenisch mehrfunktionell ungesättigten Monomeren und Inertgasen eingesetzt, dabei erweist es sich als besonders vorteilhaft, direkt aus der Polymerisationsanlage kommende Polyolefinpartikel zu modifizieren.

Die Einsatzmenge an thermisch zerfallenden Radikalbildnern kann reduziert werden, wenn Gasgemische aus ethylenisch mehrfunktionell ungesättigten Monomeren und inertgas-Sauerstoff-Mischungen oder Sauerstoff eingesetzt werden, unter diesen Bedingungen kann auf den Einsatz von thermisch zerfallenden Radikalbildnern gegebenenfalls verzichtet werden.

Gegebenenfalls werden bei der Herstellung der modifizierten Polypropylene verbesserter Verarbeitbarkeit folgende thermisch zerfallende Radikalbildner eingesetzt:
- Acylperoxide wie Benzoylperoxid, 4-Chlorbenzoylperoxid, 3-Methoxybenzoylperoxid und/oder Methylbenzoylperoxid;
- Alkylperoxide wie Allyl-tert.butylperoxid, 2,2-Bis(tert.butylperoxybutan), 1,1-Bis-(tert.butylperoxt)-3,3,5-trimethylcyclohexan, n-Butyl-4,4-bis(tert.butylperoxl)valerat, Diiso-propylaminomethyl-tert.amylperoxid, Dimethylaminomethyl-tert.amylperoxid, Diethylaminomethyl-tert.butylperoxid, Dimethylaminomethyl-tert.butylperoxid, 1.1-Di-(tert.amylperoxi)cyclohexan, tert.Amylperoxid, tert.Butylcumylperoxid, tert.Butylperoxid, und/oder 1-Hydroxybutyl-n-butylperoxid;
- Perester und Peroxycarbonate wie Butylperacetat, Cumylperacetat, Cumylperpropionat, Cyclohexylperacetat, Di-tert.butylperadipat, Di-tert.butylperazelat, Di-tert.butylperglutarat, Dl-tert.butylperphthalat, Di-tert.butylpersebazat, 4-Nitrocumylperpropionat, 1-Phenylethylperbenzoat, Phenylethylnitroperbenzoat, tert.Butylbicyclo-(2,2,1)heptanpercarboxylat, tert.Butyl-4-carbomethoxyperbutyrat, tert.Butylcyclobutanpercarboxylat, tert.Butylcyclohexylperoxycarboxylat, tert.Butylcyclopentylpercarboxylat, tert.Butylcyclopropanpercarboxylat, tert.Butyldimethylpercinnamat, tert.Butyl-2-(2,2-diphenylvinyl)perbenzoat, tert. Butyl-4-methoxyperbenzoat, tert.Butylperbenzoat, tert.Butylcarboxicyclohexan, tert.Butylpernaphthoat, tert.Butylperoxiisopropylcarbonat, tert.Butylpertoluat, tert. Butyl-1-phenylcyclopropylpercarboxylat, tert.Butyl-2-propylperpenten-2-oat, tert.Butyl-1-methylcypropylpercarboxylat, tert.Butyl-4-nltrophenylperacetat, tert.Butylnitrophenylperoxycarbamat, tert.Butyl-N-succinimidopercarboxylat, tert.Butylpercrotonat, tert.Butylpermaleinsäure, tert.Butylpermethacrylat, tert.Butylperoctoat, tert.Butylperoxyisopropytcarbonat, tert.Butylperisobutyrat, tert.Butylperacrylat und/oder tert.Butylperpropionat;
oder Gemische dieser Radikalbildner.

Geeignete Inertgaskomponenten des Gasgemischs sind Stickstoff oder Argon.

Als ethylenisch mehrfunktionell ungesättigte Monomere im Gasgemisch sind bei der Herstellung der modifizierten Polypropylene verbesserter Verarbeitbarkeit alle aus Gasphase sorbierbaren ethylenisch mehrfunktionell ungesättigten monomeren Verbindungen einsetzbar, die mit Hilfe von freien Radikalen polymerisierbar sind. Bevorzugt angewandt werden folgende ethylenisch mehrfunktionell ungesättigten Monomere in Anteilen von 0,01 bis 10 Masse%, bevorzugt 0,05 bis 2 Masse%, bezogen auf die eingesetzten Polypropylene :
- Divinylverbindungen wie Divinylanilin, m-Divinylbenzen, p-Divinylbenzen, Divinylpentan und/oder Divinylpropan;
- Allylverbindungen wie Allylacrylat, Allylmethacrylat, Allylmethylmaleat und/oder Allylvinylether;
- Diene wie Butadien, Chloropren, Cyclohexadien, Cyclopentadien, 2,3-Dimethylbutadien, Heptadien, Hexadien, Isopren, und/oder 1,4-Pentadien ;
- Mischungen dieser ungesättigten Monomeren.

Besonders bevorzugt wird Butadien, Isopren und/oder Dimethylbutadien als leichtflüchtiges ethylenisch mehrfunktionell ungesättigtes Monomer eingesetzt.

Als Stabilisatoren werden bevorzugt Mischungen aus 0,01 bis 0,6 Masse% phenolischen Antioxidantien, 0,01 bis 0,6 Masse% 3-Arylbenzofuranone, 0,01 bis 0,6 Masse% Verarbeitungsstabilisatoren auf Basis von Phosphiten, 0,01 bis 0,6 Masse% Hochtemperaturstabilisatoren auf Basis von Disulfiden und Thioäthern und/oder 0,01 bis 0,8 Masse% sterisch gehinderten Aminen (HALS) eingesetzt.

Geeignete phenolische Antioxidantien sind 2-tert.Butyl-4,6-dimethylphenol, 2,6-Di-tert.butyl-4-methylphenol, 2,6-Di-tert.butyl-4-isoamylphenol, 2,6,-Di-tert.butyl-4-ethylphenol, 2-tert.Butyl-4,6-diisopropylphenol, 2,6-Dicyclopentyl-4-methylphenol, 2,6-Di-tert.-butyl-4-methoxymethylphenol, 2-tert.Butyl-4,6-dioctadecylphenol, 2,5-Di-tert.butylhydrochinon, 2,6-Di-tert.butyl-4,4-hexadecyloxyphenol, 2,2'-Methylen-bis(6-tert.butyl-4-methylphenol), 4,4'-Thio-bis-(6-tert.butyl-2-methylphenol), 3(3,5-Di-tert.butyl - 4 - hydroxyphenyl)propionsäureoctadecylester, 1,3,5 - Trimethyl - 2,4,6-tris(3',5'di-tert.butyl-4-hydroxybenzyl)benzen und/oder Pentaerythritol-tetrakis[3-(3,5-di-tert.butyl-4-hydroxyphenyl)]propionat.

Als Benzofuranonderivat ist insbesondere 5,7-Di-tert.butyl-3-(3,4-di-methylphenyl)-3H-benzofuran-2-on geeignet.

Als HALS-Verbindungen sind Bis-2,2,6,6 tetramethyl-4-piperidylsebazat und/oder Poly - ([1,1,3,3,-tetramethylbutyl)-imino] - 1,3,5,- triazin - 2,4,diyl)[2,2,6,6-tetramethylpiperidyl)-amino]-hexamethylen-4-(2,2,6,6-tetra-methyl)piperidyl)-imino] besonders geeignet.

Als Nukleierungsmittel werden α-Nukleierungsmittel wie Talkum oder das Natriumsalz der Methylen-bis(2,4-di-tert.butylphenol)phosphorsäure oder β-Nukleierungsmittel wie Adipinsäuredianilid, Dibenzochinacridon oder N,N'-Dicyclohexyl-2,6-naphthalindicarboxamid eingesetzt.

Als Verarbeitungshilfsmittel können Calciumstearat, Magnesiumstearat und/oder Wachse eingesetzt werden.

Die modifizierten Polypropylene verbesserter Verarbeitbarkeit werden erfindungsgemäß nach einem kontinuierlichen Verfahren hergestellt, bei dem partikelförmige Propylen-Homopolymere und/oder partikelförmige Propylen-Copolymere In Form von Pulvern, Granulaten oder Grießen mit Korngrößen im Bereich von 0,001 bis 7 mm, bevorzugt 0,05 bis 4 mm, gegebenenfalls unter Zusatz von 0,05 bis 3 Masse%, bezogen auf die eingesetzten Propylen-Homopolymere und/oder Propylen-Copolymere, an Acylperoxiden, Alkylperoxiden, Hydroperoxiden, Peroxycarbonaten und/oder Perestern als thermisch zerfallende Radikalbildner, mit einem Gasgemisch, das aus 5 bis 65 Vol% leichtflüchtigen, ethylenisch mehrfunktionell ungesättigten Monomeren, bevorzugt C₄- bis C₁₀- Dienen und/oder C₇- bis C₁₀- Divinylverbindungen, und 95 bis 35 Vol% Inertgas oder Sauerstoff oder Inertgas-Sauerstoff-Mischungen in beliebigen Mischungsverhältnissen besteht, umgesetzt werden, wobei
a) die partikelförmigen Propylen-Homopolymere und/oder partikelförmigen Propylen-Copolymere in einem kontinuierlichen Mischer, gegebenenfalls unter Zusatz thermisch zerfallender Radikalbildner, mit dem Gasgemisch bei einer Temperatur von 20°C bis 120°C, vorzugsweise von 60 bis 100°C, und einer mittleren Verweilzeit von 10s bis 1000 s, bevorzugt 60 s bis 600 s, in fester Phase behandelt werden, wobei in den partikelförmigen Propylen-Homopolymere und/oder partikelförmigen Propylen-Copolymere der sorbierte Anteil der ethylenisch mehrfunktionell ungesättigten Monomeren 0,01 bis 10 Masse%, bevorzugt 0,05 bis 2 Masse%, bezogen auf die eingesetzten partikelförmigen Propylen-Homopolymere und/oder partikelförmigen Propylen-Copolymere, beträgt,
b) die partikelförmigen Propylen-Homopolymere und/oder partikelförmigen Propylen-Copolymere, in denen die leichtflüchtigen, ethylenisch mehrfunktionell ungesättigten Monomere sorbiert sind, unter einer Atmosphäre aus diesem Gasgemisch in kontinuierlich arbeitenden Knetern oder Extrudern, vorzugsweise in Doppelschneckenextrudern, bei 110°C bis 210°C bei einer Verweilzeit von 0,3 bis 8,0 min aufgeschmolzen werden,
c) die Schmelze danach auf 220°C bis 300°C bei einer Verweilzeit von 0,3 bis 7,0 min erwärmt wird, wobei nicht-umgesetzte leichtflüchtige, ethylenisch mehrfunktionell ungesättigte Monomere und Zerfallsprodukte entfernt werden, und
d) die Schmelze in an sich bekannter Weise granuliert wird,
und wobei vor dem Verfahrensschritt a) und/oder d) und/oder vor bzw. während des Verfahrensschrittes c) als weitere Zusatzstoffe 0,01 bis 2,5 Masse% Stabilisatoren, 0,1 bis 1 Masse% Antistatika, 0,2 bis 3 Masse% Pigmente , 0,05 bis 1 Masse% Nukleierungsmittel, 5 bis 40 Masse% Füll- und/oder Verstärkerstoffe , 2 bis 20 Masse% Flammschutzmittel und/oder 0,01 bis 5 Masse% Verarbeitungshilfsmittel, bezogen auf das eingesetzte Propylen-Homopolymer und/oder Propylen-Copolymer, gegebenenfalls zugesetzt werden können.

Erfindungsgemäß wird bei der Herstellung der modifizierten Polypropylene verbesserter Verarbeitbarkeit die Temperatur T, bei der die Sorption der leichtflüchtigen ethylenisch mehrfunktionellen Monomeren durchgeführt wird, so gewählt, daß der Zerfall der gegebenenfalls enthaltenen thermisch zerfallenden Radikalbildner mit niedriger Geschwindigkeit abläuft.

Das erfindungsgemäße Verfahren zur Herstellung der modifizierten Polypropylene verbesserter Verarbeitbarkeit zeichnet sich vor allem dadurch aus, daß im Verfahrensschritt b) und c) die ethylenisch mehrfunktionellen ungesättigten Monomere gasförmig vorliegen und aus der Gasphase sorbiert werden, so daß eine Kondensation an den Polypropylenpartikeloberflächen und zwischen den Partikeln vermieden wird. Erfindungsgemäß wird für die Sorption eine Temperatur T gewählt , bei der die Halbwertszeit des gegebenenfalls zugesetzten thermisch zerfallenden Radikalbildners ein Vielfaches der für die Erreichung eines stationären Sorptionsgleichgewichtes der ethylenisch mehrfunktionellen ungesättigten Monomeren erforderlichen Zeit ist, um den Zerfall des thermisch zerfallenden Radikalbildners im Verfahrensschritt b) auszuschließen. Die Temperatur, bei der die Halbwertszeit der Radikalbildner 1 Minute beträgt, soll im Bereich von 155 bis 195°C liegen, so daß der thermische Zerfall der Radikalbildner bei Temperaturen unterhalb 150°C beginnt, wenn die Reaktionsmischung noch in fester Phase vorliegt, und bei einer Temperatur von 180 bis 200°C nahezu vollständig beendet ist, wenn Reaktionsmischung sich in der Phase des Aufschmelzens befindet.

Im Verfahrensschritt c) werden durch die Erwärmung infolge des Zerfalls der auf der Polypropylenkette gebildeten Radikale und/oder des thermisch zerfallenden Radikalbildners Radikale gebildet, die zu einer Wasserstoff-Abstraktion an der Polypropylen-Kette und nachfolgend zu einer Kopplung der ethylenisch mehrfunktionellen ungesättigten Monomeren an das Polypropylen führt Durch die im Verfahrensschritt b) erreichte weitgehend homogene Verteilung von radikalbildenden Spezies und ethylenisch mehrfunktionellen ungesättigten Monomeren in den Polypropylenpartikeln wird erfindungsgemäß einerseits eine hohe Effizienz der Modifizierung und andererseits eine homogene Verteilung der modifizierten Bereiche in den Polypropylenpartikeln erreicht. Diese homogene Verteilung ist letztlich eine entscheidende Einflußgröße auf die sich im Produkt ausbildende Morphologie und bewirkt damit wesentlich die makroskopischen Produktkennwerte, wie z.B. Festigkeit und Schlagzähigkeit.

Als kontinuierliche Gas-Feststoffabsorber werden bei dem Verfahren zur Herstellung der modifizierten Polypropylene verbesserter Verarbeitbarkeit bevorzugt kontinuierliche Durchflußmischer zur Sorption der leichtflüchtigen ethylenisch mehrfunktionellen Monomeren eingesetzt.

Die Erwärmung und das Aufschmelzen der Polypropylenpartikel, in denen die ethylenisch mehrfunktionellen ungesättigten Monomere und gegebenenfalls die Acylperoxide, Alkylperoxide, Hydroperoxide und/oder Perester als thermisch zerfallende Radikalbildner sorbiert sind, erfolgt bei dem erfindungsgemäßen Verfahren zur Herstellung der modifizierten Polypropylene verbesserter Verarbeitbarkeit unter einer Atmosphäre der leichtflüchtigen ethylenisch mehrfunktionellen ungesättigten Monomeren bevorzugt in kontinuierlich arbeitenden Knetern oder Extrudern, vorzugsweise in Doppelschneckenextrudern.

Die verbesserte Verarbeitbarkeit der nach dem erfindungsgemäßen Verfahren hergestellten modifizierten Polypropylene kann durch den Schwellwert ζ charakterisiert werden, der durch den Quotienten aus dem Strangdurchmesser des modifizierten Polypropylens d_{I} (mm) und dem Strangdurchmesser des nichtmodifizierten Polypropylen-Ausgangsprodukts d_{A} (mm) definiert wird. Die Ermittlung des Strangdurchmessers erfolgt bei der Schmelzindexbestimmung von Polypropylen nach ISO1131.

Das Verarbeitungsverhalten der nach dem erfindungsgemäßen Verfahren hergestellten modifizierten Polypropylene wird dem günstigeren Verarbeitungsverhalten des nach dem Hochdruckverfahren hergestellten Polyethylens um so ähnlicher, um so höhere Schwellwerte ζ das modifizierte Polypropylen besitzt. Nach dem erfindungsgemäßen Verfahren lassen sich modifizierten Polypropylene mit Schwellwerten ζ von 1,1 bis 3,0 herstellen.

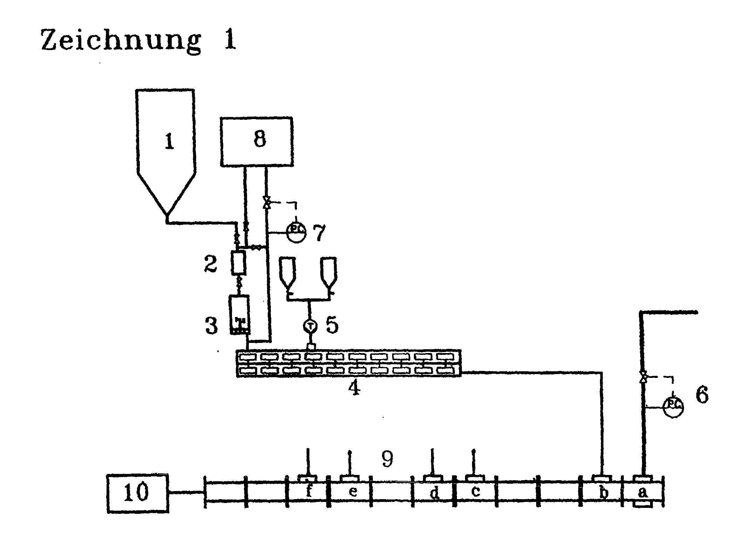

Die Erfindung wird beispielhaft am Verfahrensschema entsprechend Zeichnung 1 erläutert. Die Bezugszeichen haben dabei folgende Bedeutung:
1 Zwischenlagerbunker für Polypropylen
2 Produktschleuse
3 Feststoffdosiervorrichtung
4 kontinuierlicher beheizbarer Durchlaufmischer
5 Dosierpumpe
6 Mengenregelung für Monomerdosierung
7 Gas-Druckregelung
8 Abgasreinigung
9 Doppelschneckenextruder
   a Spezialgehäuse mit Dosierstutzen zur Gaszuführung
   b Spezialgehäuse mit Zulaufstutzen zur Zuführung des pulverförmigen Reaktionsgemischs
   c Spezialgehäuse mit Entgasungsstutzen
   d Spezialgehäuse mit Dosierstutzen für Schleppmitteldosierung
   e Spezialgehäuse mit Stutzen für Feinentgasung
   f Dosierstutzen für Zusatzstoffe
10 Granuliereinrichtung

Das Polypropylen gelangt aus Zwischenlagerbunkern (1) über eine Produktschleuse (2) und eine Feststoffdosiervorrichtung (3) in einen kontinuierlichen beheizbaren Durchlaufmischer (4), der eine hohe Homogenisierwirkung bei der Vermischung der Polypropylenpartikel mit den gegebenenfalls zugesetzten thermisch zerfallenden Radikalbildnern besitzt.

Die gegebenenfalls zugesetzten thermisch zerfallenden Radikalbildner werden mit der Dosierpumpe (5) zu einer Vorrichtung zum Feinzerteilen der Flüssigkeit gefördert und auf das im Durchlaufmischer mechanisch erzeugte Wirbelbett gesprüht. Im Durchlaufmischer (4) werden die sich in der Gasphase befindenden ethylenisch mehrfunktionellen ungesättigten Monomere durch die Polypropylenpartikel sorbiert.

Die die bifunktionell ungesättigten Monomere enthaltende Gasmischung wird über eine Mengenregelung (6), deren Sollwert in Abhängigkeit vom Massedruck bzw. vom Schmelzindex festgelegt wird, in ein Spezialgehäuse (a) des Doppelschneckenextruders (9) vor dem Zulaufstutzen (b) für das pulverförmige Reaktionsgemisch dosiert und strömt im Gegenstrom zum Pulver durch den Zulaufstutzen (b) für das pulverförmige Reaktionsgemisch in den kontinuierlicher beheizbarer Durchlaufmischer (4). Im Zugaberohr des Durchlaufmischers mischen sich die bifunktionell ungesättigten Monomere mit dem durch das Pulver eingetragenen Inertgas oder Sauerstoff oder Inertgas-Sauerstoff-Mischungen. Das Gasgemisch strömt über eine Druckregelung (7) zur Abgasreinigung (8).

Das die bifunktionell ungesättigten Monomere enthaltende Gasgemisch kann gegebenenfalls durch eine Verdichter-Umwälzpumpe in einem Kreislauf umgewälzt werden.

Der Doppelschneckenextruder (9), der am Spezialgehäuse (a) mit einem Dosierstutzen zur Gaszuführung ausgerüstet ist, ermöglicht zwischen den Stutzen (b) und (c) In Gegenwart der bifunktionell ungesättigten Monomere eine Erwärmung und das Aufschmelzen des über den Zulaufstutzen (b) zugeführten behandelten Polypropylens.

Der Entgasungsstutzen (c) dient einer Grobentgasung des modifizierten Polypropylens. Die Ausrüstung des Doppelschneckenextruders mit einem Dosierstutzen für Schleppmitteleindosierung (d) und einem zweiten Entgasungsstutzen (e) bewirkt eine Feinentgasung der Reaktionsmischung. Über den Dosierstutzen (f) wird gegebenenfalls eine weitere Zuführung von Hilfsstoffen ermöglicht. Schneckenelemente hoher Homogenisierwirkung zwischen dem Dosierstutzen (f) und dem Produktaustrag dienen einer homogenen Durchmischung des modifizierten Polypropylens. Die nachgeschaltete Granuliereinrichtung (10) bewirkt eine Zerteilung des Schmelzestrangs.

Die erfindungsgemäßen modifizierten Polypropylene verbesserter Verarbeitbarkeit sowie Mischungen dieser modifizierten Polypropylene verbesserter Verarbeitbarkeit mit nichtmodifizierten Polypropylenen sind insbesondere zur Herstellung von Folien, Fasern, Garnen, textilen Flächengebilden, Platten, Beschichtungen, Rohren, Hohlkörpern und Schaumstoffen geeignet.

Das erfindungsgemäße Verfahren wird durch nachfolgende Beispiele erläutert:

### Beispiel 1

In den kontinuierlichen beheizbaren Durchlaufmischer (4) der Versuchseinrichtung entsprechend Zeichnung 1 wird aus dem Zwischenlagerbunker (1) ein pulverförmiges Polypropylen-Homopolymer (Schmelzindex von 0,2 g/10 min bei 230°C/2,16 kp, mittlerer Partikeldurchmesser 0,55 mm) über die Produktschleuse (2) und die Feststoffdosiervorrichtung (3) kontinuierlich dosiert. Weiterhin werden in den Durchlaufmischer (4) über die angeflanschte Hilfsstoffdosierung 0,1Gew.% Calciumstearat und 0,5 Gew.% Bis(tert.butylperoxy)-2,5-dimethylhexan, jeweils bezogen auf das Polypropylen-Homopolymer, kontinuierlich dosiert. Unter homogener Durchmischung bei 45°C wird das mit thermisch zerfallendem Radikalbildner und Hilfsstoff beladene Polypropylen-Homopolymer bei einer Verweilzeit von 6 min bei 45°C durch das aus dem Extruder (9) über den Zulaufstutzen (b) einströmende Butadien-Stickstoff-Gemisch mit 1,1 Gew.% Butadien, bezogen auf das Polypropylen-Homopolymer, sorptiv beladen. Nach Überführung in den Doppelschneckenextruder (9) über (b) wird das pulverförmige Reaktionsgemisch in Kontakt mit dem über den Dosierstutzen zur Gaszuführung (a) eindosierten Butadien-Stickstoff-Gemisch unter Zusatz von 0,1 Masse% Tetrakis[methylen(3,5-di-tert.butylhydroxyhydrocinna-mat)]methan und 0,1 Masse% Tris(2,4-di-tert.butylphenyl)phosphit bei einer Massetemperatur von 235°C aufgeschmolzen, nach einer Grobentgasung unter Eindosierung von Wasser als Schleppmittel einer Feinentgasung unterzogen, ausgetragen und granuliert.
Das resultierende modifizierte Polypropylen besitzt einen IR-spektroskopisch ermittelten Gehalt an gebundenem Butadien von 1,0 Gew.%, einen Schmelzindex von 0,85 g/10 min bei 230°C/2,16 kp und einen Schwellwert ζ von 1,82.

### Beispiel 2

In den kontinuierlichen beheizbaren Durchlaufmischer (4) der Versuchseinrichtung entsprechend Zeichnung 1 wird aus dem Zwischenlagerbunker (1) ein pulverförmiges statistisches Polypropylen-Copolymer (Schmelzindex von 0,85 g/10 min bei 230°C/2,16 kp, mittlerer Partikeldurchmesser 0,85 mm) über die Produktschleuse (2) und die Feststoffdosiervorrichtung kontinuierlich dosiert. Weiterhin werden in den Druchlaufmischer (4) über die angeflanschte Hilfsstoffdosierung 0,05 Gew.% Hydrotalcit, 0,05 Gew.% Calciumstearat und 0,45 Gew.% tert.Butylperoxybenzoat, jeweils bezogen auf das Polypropylen-Copolymer, kontinuierlich dosiert. Unter homogener Durchmischung bei 70°C wird das mit thermisch zerfallendem Radikalbildner und Hilfsstoff beladene Polypropylen-Copolymer bei einer Verweilzeit von 4 min bei 70°C durch das aus dem Extruder (9) über den Zulaufstutzen <b) einströmende Divinylbenzen-Stickstoff-Gemisch mit 0,35 Gew.% Divinylbenzen, bezogen auf das Polypropylen-Copolymer, sorptiv beladen. Nach Überführung in den Doppelschneckenextruder (9) über (b) wird das pulverförmige Reaktionsgemisch in Kontakt mit dem über den Dosierstutzen zur Gaszuführung (a) eindosierten Divinylbenzen-Stickstoff-Gemisch unter Zusatz von 0,1 Masse% Tetrakis[methylen(3,5-di-tert.butylhydroxyhydrocinnamat)]methan und 0,1 Masse% Tris(2,4-di-tert.butylphenyl)phosphit bei einer Massetemperatur von 225°C aufgeschmolzen, nach einer Grobentgasung unter Eindosierung von Wasser als Schleppmittel einer Feinentgasung unterzogen, ausgetragen und granuliert.
Das resultierende modifizierte Polypropylen-Copolymer besitzt einen IR-spektroskopisch ermittelten Gehalt an gebundenem Divinylbenzen von 0,32 Gew.%, einen Schmelzindex von 1,35 g/10 min bei 230°C/2,16 kp und einen Schwellwert ζ von 2,0.

### Beispiel 3

In den kontinuierlichen beheizbaren Durchlaufmischer (4) der Versuchseinrichtung entsprechend Zeichnung 1 wird aus dem Zwischenlagerbunker (1) ein putverförmiges Polypropylen-Homopolymer (Schmelzindex von 0,2 g/10 min bei 230°C/2,16 kp, mittlerer Partikeldurchmesser 0,55 mm) über die Produktschleuse (2) und die Feststoffdosiervorrichtung (3) kontinuierlich dosiert. Weiterhin werden in den Durchlaufmischer (4) über die angeflanschte Hilfsstoffdosierung 0,1 Gew.% Calciumstearat und 0,2 Gew.% tert.Butylperbenzoat, jeweils bezogen auf das Polypropylen-Homopolymer, kontinuierlich dosiert. Unter homogener Durchmischung bei 45°C wird das mit thermisch zerfallendem Radikalbildner und Hilfsstoff beladene Polypropylen-Homopolymer bei einer Verweilzeit von 6 min bei 45°C durch das aus dem Extruder (9) über den Dosierstutzen (b) einströmende Butadien-Sauerstoff-Gemisch mit 0,5 Gew.% Butadien, bezogen auf das Polypropylen-Homopolymer, sorptiv beladen. Nach Überführung in den Doppelschneckenextruder (9) über (b) wird das pulverförmige Reaktionsgemisch in Kontakt mit dem über den Dosierstutzen zur Gaszuführung (a) eindosierten Butadien-Sauerstoff-Gemisch unter Zusatz von 0,1 Masse% Tetrakis[methylen(3,5-di-tert.butylhydroxyhydrocinnamat)]methan und 0,1 Masse% Tris(2,4-di-tert.butylphenyl)phosphit bei einer Massetemperatur von 235°C aufgeschmolzen, nach einer Grobentgasung unter Eindosierung von Wasser als Schleppmittel einer Feinentgasung unterzogen, ausgetragen und granuliert.
Das resultierende modifizierte Polypropylen besitzt einen IR-spektroskopisch ermittelten Gehalt an gebundenem Butadien von 0,4 Gew.%, einen Schmelzindex von 2,0 g/10 min bei 230°C/2,16 kp und einen Schwellwert ζ von 1,85.

## Patentansprüche

1. Modifizierte Propylen-Homopolymere und/oder modifizierte Propylen-Copolymere verbesserter Verarbeitbarkeit aus Propylen-Homopolymeren mit Schmelzindices von 0,05 bis 35 g/10 min bei 230°C/2,16kp und/oder Copolymeren aus 85,0 bis 99,9 Masse% Propylen und 0,1 bis 15,0 Masse% α-Olefinen mit 2 bzw. 4 bis 18 C-Atomen mit Schmelzindices von 0,05 bis 45 g/10 min bei 230°C/2,16 kp und ethylenisch mehrfunktionell ungesättigten Monomeren, **dadurch gekennzeichnet, daß** die modifizierten Propylen-Homopolymere und/oder modifizierten Propylen-Copolymere nach einem kontinuierlichen Verfahren hergestellt worden sind, bei dem partikelförmige Propylen-Homopolymere und/oder partikelförmige Propylen-Copolymere in Form von Pulvern, Granulaten oder Grießen mit Korngrößen im Bereich von 0,001 bis 7 mm, bevorzugt 0,05 bis 4 mm, gegebenenfalls unter Zusatz von 0,05 bis 3 Masse%, bezogen auf die eingesetzten Propylen-Homopolymere und/oder Propylen-Copolymere, an Acylperoxiden, Alkylperoxiden, Hydroperoxiden, Peroxycarbonaten und/oder Perestern als thermisch zerfallende Radikalbildner, mit einem Gasgemisch, das aus 5 bis 65 Vol% leichtflüchtigen, ethylenisch mehrfunktionell ungesättigten Monomeren, bevorzugt C₄- bis C₁₀- Dienen und/oder C₇- bis C₁₀- Divinylverbindungen, und 95 bis 35 Vol% Inertgas oder Sauerstoff oder inertgas-Sauerstoff-Mischungen in beliebigen Mischungsverhältnissen besteht, umgesetzt worden sind, wobei
a) die partikelförmigen Propylen-Homopolymere und/oder partikelförmigen Propylen-Copolymere in einem kontinuierlichen Mischer, gegebenenfalls unter Zusatz thermisch zerfallender Radikalbildner, mit dem Gasgemisch bei einer Temperatur von 20°C bis 120°C, vorzugsweise von 60 bis 100°C, und einer mittleren Verweilzeit von 10s bis 1000 s, bevorzugt 60 s bis 600 s, in fester Phase behandelt worden sind, wobei in den partikelförmigen Propylen-Homopolymeren und/oder partikelförmigen Propylen-Copolymeren der sorbierte Anteil der ethylenisch mehrfunktionell ungesättigten Monomeren 0,01 bis 10 Masse%, bevorzugt 0,05 bis 2 Masse%, bezogen auf die eingesetzten partikelförmigen Propylen-Homopolymere und/oder partikelförmigen Propylen-Copolymere, beträgt,
b) die partikelförmigen Propylen-Homopolymere und/oder partikelförmigen Propylen-Copolymere, in denen die leichtflüchtigen, ethylenisch mehrfunktionell ungesättigten Monomere sorbiert sind, unter einer Atmosphäre aus diesem Gasgemisch bei 110°C bis 210°C bei einer Verweilzeit von 0,3 bis 8,0 min aufgeschmolzen worden sind,
c) die Schmelze danach auf 220°C bis 300°C bei einer Verweilzeit von 0,3 bis 7,0 min erwärmt worden ist, wobei nicht-umgesetzte leichtflüchtige, ethylenisch mehrfunktionell ungesättigte Monomere und Zerfallsprodukte entfernt worden sind, und
d) die Schmelze in an sich bekannter Weise granuliert worden ist,
und wobei vor dem Verfahrensschritt a) und/oder d) und/oder vor bzw. während des Verfahrensschrittes c) als weitere Zusatzstoffe 0,01 bis 2,5 Masse% Stabilisatoren, 0,1 bis 1 Masse% Antistatika, 0,2 bis 3 Masse% Pigmente , 0,05 bis 1 Masse% Nukleierungsmittel, 5 bis 40 Masse% Füll- und/oder Verstärkerstoffe , 2 bis 20 Masse% Flammschutzmittel und/oder 0,01 bis 5 Masse% Verarbeitungshilfsmittel, bezogen auf das eingesetzte Propylen-Homopolymer und/oder Propylen-Copolymer, gegebenenfalls zugesetzt worden sind.

2. Modifizierte Propylen-Homopolymere und/oder modifizierte Propylen-Copolymere verbesserter Verarbeitbarkeit nach Anspruch 1, **dadurch gekennzeichnet, daß** die partikelförmigen Propylen-Homopotymere und/oder Propylen-Copolymere aus Propylen-Homopolymeren und/oder Propylen-Copolymeren mit bimodaler Molmassenverteilung, die in einer Reaktorkaskade unter Einsatz von Ziegler-Natta-Katalysatoren oder Metallocenkatalysatoren hergestellt wurden, mit Molmassen-Gewichtsmitteln M_{w} von 500000 bis 1500000 g/mol, Molmassen-Zahlenmitteln Mₙ von 25000 bis 100000 g/mol und M_{w} / Mₙ -Werten von 5 bis 60, bevorzugt mit Molmassen-Gewichtsmitteln M_{w} von 600000 bis 1000000 g/mol, Molmassen-Zahlenmitteln Mₙ von 30000 bis 100000 g/mol und M_{w} / Mₙ -Werten von 15 bis 35, bestehen.

3. Modifizierte Propylen-Homopolymere und/oder modifizierte Propylen-Copolymere verbesserter Verarbeitbarkeit nach Anspruch 1 und 2, **dadurch gekennzeichnet, daß** die C₄- bis C₁₀- Diene Butadien, Isopren und/oder Dimethylbutadien sind.

4. Kontinuierliches Verfahren zur Herstellung modifizierter Propylen-Homopolymerer und/oder modifizierter Propylen-Copolymerer verbesserter Verarbeitbarkeit aus Propylen-Homopolymeren mit Schmelzindices von 0,05 bis 35 g/10 min bei 230°C/2,16kp und/oder Copolymeren aus 85,0 bis 99,9 Masse% Propylen und 0,1 bis 15,0 Masse% α-Olefinen mit 2 bzw. 4 bis 18 C-Atomen mit Schmelzindices von 0,05 bis 45 g/10 min bei 230°C/2,16kp und ethylenisch mehrfunktionell ungesättigten Monomeren, **dadurch gekennzeichnet, daß** partikelförmige Propylen-Homopolymere und/oder partikelförmige Propylen-Copolymere in Form von Pulvern, Granulaten oder Grießen mit Korngrößen im Bereich von 0,001 bis 7 mm, bevorzugt 0,05 bis 4 mm, gegebenenfalls unter Zusatz von 0,05 bis 3 Masse%, bezogen auf die eingesetzten Propylen-Homopolymere und/oder Propylen-Copolymere, an Acylperoxiden, Alkylperoxiden, Hydroperoxiden, Peroxycarbonaten und/oder Perestern als thermisch zerfallende Radikalbildner, mit einem Gasgemisch, das aus 5 bis 65 Vol% leichtflüchtigen, ethylenisch mehrfunktionell ungesättigten Monomeren, bevorzugt C₄- bis C₁₀- Dienen und/oder C₇- bis C₁₀- Divinylverbindungen, und 95 bis 35 Vol% Inertgas oder Sauerstoff oder Inertgas-Sauerstoff-Mischungen in beliebigen Mischungsverhältnissen besteht, umgesetzt werden, wobei
a) die partikelförmigen Propylen-Homopolymere und/oder partikelförmigen Propylen-Copolymere in einem kontinuierlichen Mischer, gegebenenfalls unter Zusatz thermisch zerfallender Radikalbildner, mit dem Gasgemisch bei einer Temperatur von 20°C bis 120°C, vorzugsweise von 60 bis 100°C, und einer mittleren Verweilzeit von 10s bis 1000 s, bevorzugt 60 s bis 600 s, in fester Phase behandelt werden, wobei in den partikelförmigen Propylen-Homopolymere undloder partikelförmigen Propylen-Copolymere der sorbierte Anteil der ethylenisch mehrfunktionell ungesättigten Monomeren 0,01 bis 10 Masse%, bevorzugt 0,05 bis 2 Masse%, bezogen auf die eingesetzten partikelförmigen Propylen-Homopolymere und/oder partikelförmigen Propylen-Copolymere, beträgt,
b) die partikelförmigen Propylen-Homopolymere und/oder partikelförmigen Propylen-Copolymere, in denen die leichtflüchtigen, ethylenisch mehrfunktionell ungesättigten Monomere sorbiert sind, unter einer Atmosphäre aus diesem Gasgemisch in kontinuierlich arbeitenden Knetem oder Extrudern, vorzugsweise in Doppelschneckenextrudern, bei 110°C bis 210°C bei einer Verweilzeit von 0,3 bis 8,0 min aufgeschmolzen werden,
c) die Schmelze danach auf 220°C bis 300°C bei einer Verweilzeit von 0,3 bis 7,0 min erwärmt wird, wobei nicht-umgesetzte leichtflüchtige, ethylenisch mehrfunktionell ungesättigte Monomere und Zerfallsprodukte entfernt werden, und
d) die Schmelze in an sich bekannter Weise granuliert wird,
und wobei vor dem Verfahrensschritt a) und/oder d) und/oder vor bzw. während des Verfahrensschrittes c) als weitere Zusatzstoffe 0,01 bis 2,5 Masse% Stabilisatoren, 0,1 bis 1 Masse% Antistatika, 0,2 bis 3 Masse% Pigmente , 0,05 bis 1 Masse% Nukleierungsmittel, 5 bis 40 Masse% Füll- und/oder Verstärkerstoffe , 2 bis 20 Masse% Flammschutzmittel und/oder 0,01 bis 5 Masse% Verarbeitungshilfsmittel, bezogen auf das eingesetzte Propylen-Homopolymer und/oder Propylen-Copolymer, gegebenenfalls zugesetzt werden können.

5. Kontinuierliches Verfahren zur Herstellung modifizierter Propylen-Homopolymerer und/oder modifizierter Propylen-Copolymerer verbesserter Verarbeitbarkeit nach Anspruch 4, **dadurch gekennzeichnet, daß** die Behandlung mit dem Gasgemisch in kontinuierlichen Durchflußmischern als kontinuierliche Gas-Feststoff-Absorber erfolgt.

6. Kontinuierliches Verfahren zur Herstellung modifizierter Polypropylene verbesserter Verarbeitbarkeit nach Anspruch 4 oder 5, **dadurch gekennzeichnet, daß** das Aufschmelzen der Polypropylenpartikel, in denen die leichtflüchtigen , ethylenisch mehrfunktionell ungesättigten Monomere und gegebenenfalls die als thermisch zerfallende Radikalbildner eingesetzten Acylperoxide, Alkylperoxide, Hydroperoxide, Peroxycarbonate und/oder Perestern sorbiert sind, unter der Atmosphäre des Gasgemischs in kontinuierlich arbeitenden Knetern oder Extrudern, vorzugsweise in Doppelschneckenextrudern, erfolgt.

7. Verwendung von modifizierten Propylen-Homopolymeren und/oder modifizierten Propylen-Copolymeren verbesserter Verarbeitbarkeit nach einem oder mehreren der Ansprüche 1 bis 3 sowie von Mischungen mit üblichen Propylen-Homopolymeren und/oder Propylen-Copolymeren zur Herstellung von Folien, Fasern, Platten, Beschichtungen, Rohren, Hohlkörpern und Schaumstoffen.

## Claims

1. Modified propylene homopolymers and/or modified propylene copolymers with improved processibility made of propylene homopolymers having melt-flow indices in the range from 0.05 to 35 g/10 min at 230°C/2.16kp and/or copolymers consisting of 85.0 to 99.9 percent by weight propylene and 0.1 to 15.0 percent by weight α-olefins with 2 or 4 and up to 18 C-atoms and melt-flow indices from 0.05 to 45 g/10 min at 230°C/2.16 kp and ethylenically polyfunctional unsaturated monomers, **characterized in that** the modified propylene homopolymers and/or modified propylene copolymers were produced in a continuous process in which particle-shaped propylene homopolymers and/oder particle-shaped propylene copolymers such as powders, granulates, or gravels with particle sizes in the range from 0.001 to 7 mm, preferably from 0.05 to 4 mm, were reacted with a gaseous mixture consisting of 5 to 65 percent by volume highly volatile, ethylenically polyfunctional unsaturated monomers, preferably C₄- to C₁₀-dienes and/or C₇- to C₁₀-divinyl compounds, and 95 to 35 percent by volume of inert gas or oxygen or inert gas oxygen mixtures of any mixing ratio while optionally adding 0.05 to 3 percent by weight of the propylene homopolymers and/or propylene copolymers used of acyl peroxides, alkyl peroxides, hydroperoxides, peroxycarbonates and/or peresters as thermally decomposing radical former, wherein
a) said particle-shaped propylene homopolymers and/or particle-shaped propylene copolymers were treated in solid phase in a continuous mixer, optionally adding thermally decomposing radical formers, with the gaseous mixture at a temperature from 20°C bis 120°C, preferably 60 to 100°C, and a mean dwell time in the range from 10s to 1000 s, preferably 60 s to 600 s, the sorbed portion of ethylenically polyfunctional unsaturated monomers in the particle-shaped propylene homopolymers and/or particle-shaped propylene copolymers being 0.01 to 10 percent by weight, preferably 0.05 to 2 percent by weight relative to the weight of the particle-shaped propylene homopolymers and/or particle-shaped propylene copolymers used,
b) the particle-shaped propylene homopolymers and/or particle-shaped propylene copolymers that have sorbed the highly volatile, ethylenically polyfunctional unsaturated monomers were dissolved by heat in an atmosphere of said gaseous mixture at 110°C to 210°C and a dwell time of 0.3 to 8.0 min,
c) the melt was subsequently heated to 220°C to 300°C at a dwell time of 0.3 to 7.0 minutes while non-reacted highly volatile, ethylenically polyfunctional unsaturated monomers and decomposition products were removed, and
d) the melt was granulated in a generally known way,
and wherein other additives such as 0.01 to 2.5 percent by weight of stabilizers, 0.1 to 1 percent by weight of antistatics, 0.2 to 3 percent by weight of pigments, 0.05 to 1 percent by weight of nucleation agents, 5 to 40 percent by weight of fillers and/or reinforcing agents, 2 to 20 percent by weight of flame retardants and/or 0.01 to 5 percent by weight of processing auxiliaries, relative to the weight of the propylene homopolymer and/or propylene copolymer, were optionally added prior to process steps a) and/or d) and/or prior to or during process step c).

2. Modified propylene homopolymers and/or modified propylene copolymers with improved processibility according to claim 1, **characterized in that** the particle-shaped propylene homopolymers and/or particle-shaped propylene copolymers consist of propylene homopolymers and/or propylene copolymers with a bimodal molar weight distribution that were produced in a reactor cascade using Ziegler-Natta catalysts, with molar weight averages M_{w} from 500,000 to 1,500,000 g/mol, number average molar weights Mₙ von 25,000 to 100,000 g/mol and M_{w} / Mₙ values of 5 to 60, preferably with molar weight averages M_{w} of 600,000 to 1,000,000 g/mol, number average molar weights of Mₙ of 30,000 to 100,000 g/mol and M_{w} / Mₙ values of 15 to 35.

3. Modified propylene homopolymers and/or modified propylene copolymers with improved processibility according to claims 1 and 2, **characterized in that** said C₄- to C₁₀-dienes are butadiene, isoprene and/or dimethyl butadiene.

4. A continuous method for producing modified propylene homopolymers and/or modified propylene copolymers with improved processibility made of propylene homopolymers having melt-flow indices in the range from 0.05 to 35 g/10 min at 230°C/2.16kp and/or copolymers consisting of 85.0 to 99.9 percent by weight propylene and 0.1 to 15.0 percent by weight α-olefins with 2 or 4 and up to 18 C-atoms and melt-flow indices from 0.05 to 45 g/10 min at 230°C/2 kp and ethylenically polyfunctional unsaturated monomers, **characterized in that** the particle-shaped propylene homopolymers and/oder particle-shaped propylene copolymers such as powders, granulates, or gravels with particle sizes in the range from 0.001 to 7 mm, preferably from 0.05 to 4 mm, are reacted with a gaseous mixture consisting of 5 to 65 percent by volume highly volatile, ethylenically polyfunctional unsaturated monomers, preferably C₄- to C₁₀-dienes and/or C₇- to C₁₀-divinyl compounds, and 95 to 35 percent by volume of inert gas or oxygen or inert gas oxygen mixtures of any mixing ratio while optionally adding 0.05 to 3 percent by weight of the propylene homopolymers and/or propylene copolymers used of acyl peroxides, alkyl peroxides, hydroperoxides, peroxycarbonates and/or peresters as thermally decomposing radical former, wherein
a) said particle-shaped propylene homopolymers and/or particle-shaped propylene copolymers were treated in solid phase in a continuous mixer, optionally adding thermally decomposing radical formers, with the gaseous mixture at a tremperature from 20°C bis 120°C, preferably 60 to 100°C, and a mean dwell time in the range from 10s to 1000 s, preferably 60 s to 600 s, the sorbed portion of ethylenically polyfunctional unsaturated monomers in the particle-shaped propylene homopolymers and/or particle-shaped propylene copolymers being 0.01 to 10 percent by weight, preferably 0.05 to 2 percent by weight relative to the weight of the particle-shaped propylene homopolymers and/or particle-shaped propylene copolymers used,
b) the particle-shaped propylene homopolymers and/or particle-shaped propylene copolymers that have sorbed the highly volatile, ethylenically polyfunctional unsaturated monomers are dissolved by heat in an atmosphere of said gaseous mixture in continuously operating kneaders and extruders, preferably twin-screw extruders, at 110°C to 210°C and a dwell time of 0.3 to 8.0 min,
c) the melt is subsequently heated to 220°C to 300°C at a dwell time of 0.3 to 7.0 minutes while non-reacted highly volatile, ethylenically polyfunctional unsaturated monomers and decomposition products are removed, and
d) the melt is granulated in a generally known way,
and wherein other additives such as 0.01 to 2.5 percent by weight of stabilizers, 0.1 to 1 percent by weight of antistatics, 0.2 to 3 percent by weight of pigments , 0.05 to 1 percent by weight of nucleation agents, 5 to 40 percent by weight of fillers and/or reinforcing agents, 2 to 20 percent by weight of flame retardants and/or 0.01 to 5 percent by weight of processing auxiliaries, relative to the weight of the propylene homopolymer and/or propylene copolymer, may optionally be added prior to process steps a) and/or d) and/or prior to or during process step c).

5. The continuous method for producing modified propylene homopolymers and/or modified propylene copolymers with improved processibility according to claim 4, **characterized in that** treatment with the gaseous mixture is carried out using continuous pipeline flow mixers as continuous gas-solid absorbers

6. The continuous method for producing modified propylene homopolymers and/or modified propylene copolymers with improved processibility according to claims 4 or 5, **characterized in that** the polypropylene particles in which the highly volatile, ethylenically polyfunctional unsaturated monomers are sorbed and any acyl peroxides, alkyl peroxides, hydroperoxides, peroxycarbonates and/or peresters optionally used as thermally decomposing radical formers are dissolved by heat in continuously operating kneaders or extruders, preferably twin-screw extruders.

7. Use of modified propylene homopolymers and/or modified propylene copolymers with improved processibility according to one or several of the preceding claims 1 to 3 as well as of mixtures with common propylene homopolymers and/or propylene copolymers for producing films, fibers, plates, coatings, pipes, hollow bodies, and foams.

## Revendications

1. Homopolymères de propylène modifiés et/ou copolymères de propylène modifiés avec possibilité améliorée de mise en oeuvre en homopolymères de propylène présentant des indices de fusion de 0,05 à 35 g/10 min à 230°C/2,16kp et/ou en copolymères de 85,0 à 99,9 % en masse de propylène et 0,1 à 15,0 % en masse d'oléfines α avec 2 ou 4 à 18 atomes de carbone avec des indices de fusion de 0,05 à 45 g/10 min à 230°C/2,16kp, et en monomères insaturés éthyléniquement multifonctionnel, **caractérisés en ce que** les homopolymères de propylène modifiés et/ou les copolymères de propylène modifiés ont été réalisés suivant un procédé en continu, dans lequel on a converti des homopolymères de propylène en forme de particules et/ou des copolymères de propylène en forme de particules sous forme de poudres, de granulés ou de semoules d'une taille granulométrique dans la plage de 0,001 à 7 mm, de préférence de 0,05 à 4 mm, le cas échéant avec addition de 0,05 à 3 % en masse, par rapport aux homopolymères de propylène et/ou aux copolymères de propylène utilisés, d'acyle-peroxydes, d'alkyle-peroxydes, d'hydro-peroxydes, de peroxy-carbonates et/ou de peresters à titre de formateurs de radicaux thermiquement décomposés, avec un mélange gazeux constitué de 5 à 65 % en volume de monomères facilement volatiles, insaturés éthyléniquement multifonctionnel, de préférence de diènes C₄ à C₁₀ et/ou de composés de divinyle C₇ à C₁₀, et de 95 à 35 % en volume de gaz inerte ou d'oxygène ou de mélanges de gaz inerte/oxygène dans des rapports de mélange quelconques,
dans lesquels
a) les homopolymères de propylène en forme de particules et/ou lés copolymères de propylène en forme de particules ont été traités en phase solide dans un mélangeur continu, le cas échéant avec addition de formateurs de radicaux décomposés thermiquement, avec ule mélange gazeux à une température de 20°C à 120°C, de préférence de 60° à 100°C, et avec une durée de séjour moyenne de 10 s à 1.000 s, de préférence de 60 s à 600 s, et dans les homopolymères de propylène en forme de particules et/ou les copolymères de propylène en forme de particules la part absorbée des monomères insaturés éthyléniquement multifonctionnel s'élève à 0,01 à 10 % en masse, de préférence à 0,05 à 2 % en masse, par rapport aux homopolymères de propylène en forme de particules et/ou aux copolymères de propylène en forme de particules utilisés,
b) les homopolymères de propylène en forme de particules et/ou les copolymères de propylène en forme de particules, dans lesquels les monomères facilement volatiles et insaturés éthyléniquement multifonctionnel sont absorbés, ont été fondus dans une atmosphère de ce mélange gazeux à une température de 110°C à 210°C pendant une durée de séjour de 0,3 à 8,0 min,
c) la matière en fusion a été ensuite chauffée à une valeur de 220°C à 300°C pendant une durée de séjour de 0,3 à 7,0 min, des monomères non convertis facilement volatiles insaturés éthyléniquement multifonctionnel et les produits de décomposition ayant été enlevés, et
d) la matière en fusion a été mise en granulés de manière connue en soi, et avant l'étape de procédé a) et/ou l'étape d) et/ou avant ou pendant l'étape c), on a ajouté le cas échéant comme autres additifs 0,01 à 2,5 % en masse de stabilisateurs, 0,1 à 1 % en masse d'antistatiques, 0,2 à 3 % en masse de pigments, 0,05 à 1 % en masse d'agent de nucléation, 5 à 40 % en masse d'agents de remplissage et/ou de renforcement, 2 à 20 % en masse d'agents anti-flammes et/ou 0,01 à 5 % en masse d'agents auxiliaires de traitement, par rapport à l'homopolymère de propylène et/ou au copolymère de propylène utilisé.

2. Homopolymères de propylène modifiés et/ou copolymères de propylène modifiés avec possibilité améliorée de mise en oeuvre, selon la revendication 1, **caractérisés en ce que** les homopolymères de propylène et/ou les copolymères de propylène en forme de particules sont constitués par des homopolymères de propylène et/ou des copolymères de propylène à répartition de masse molaire bimodale qui ont été réalisés dans une cascade de réacteurs en utilisant des catalyseurs de Ziegler-Natta ou des catalyseurs de métallocène, avec des agents pondéraux de masse molaire M_{W} de 500.000 à 1.500.000 g/mole, des agents numériques de masse molaire Mₙ de 25.000 à 100.000 g/mole et des valeurs M_{W}/Mₙ de 5 à 60, de préférence avec des agents pondéraux de masse molaire M_{W} de 600.000 à 1.000.000 g/mole, des agents numériques de masse molaire Mₙ de 30.000 à 100.000 g/mole et des valeurs M_{W}/Mₙ de 15 à 35.

3. Homopolymères de propylène modifiés et/ou copolymères de propylène modifiés avec possibilité améliorée de mise en oeuvre, selon les revendications 1 et 2, **caractérisés en ce que** les diènes C₄ à C₁₀ sont du butadiène, de l'isoprène et/ou du diméthyle-butadiène.

4. Procédé en continu pour réaliser des homopolymères de propylène modifiés et/ou des copolymères de propylène modifiés avec possibilité améliorée de mise en oeuvre, à partir d'homopolymères de propylène présentant des indices de fusion de 0,05 à 35 g/10 min à 230°C/2,16kp et/ou à partir de copolymères de 85,0 à 99,9 % en masse de propylène et 0,1 à 15,0 % en masse d'oléfines α avec 2 ou 4 à 18 atomes de carbone avec des indices de fusion de 0,05 à 45 g/10 min à 230°C/2,16kp, et de monomères insaturés éthyléniquement multifonctionnel, **caractérisés en ce que** les homopolymères de propylène en forme de particules et/ou les copolymères de propylène en forme de particules ont été convertis sous forme de poudres, de granulés ou de semoules d'une taille granulométrique dans la plage de 0,001 à 7 mm, de préférence de 0,05 à 4 mm, le cas échéant avec addition de 0,05 à 3 % en masse, par rapport aux homopolymères de propylène et/ou aux copolymères de propylène utilisés, d'acyle-peroxydes, d'alkyle-peroxydes, d'hydro-peroxydes, de peroxy-carbonates et/ou de peresters à titre de formateurs de radicaux thermiquement décomposés, avec un mélange gazeux constitué de 5 à 65 % en volume de monomères facilement volatiles, insaturés éthyléniquement multifonctionnel, de préférence de diènes C₄ à C₁₀ et/ou de composés de divinyle C₇ à C₁₀, et de 95 à 35 % en volume de gaz inerte ou d'oxygène ou de mélanges de gaz inerte/oxygène dans des rapports de mélange quelconques,
dans lequel
a) les homopolymères de propylène en forme de particules et/ou les copolymères de propylène en forme de particules ont été traités en phase solide dans un mélangeur continu, le cas échéant avec addition de formateurs de radicaux décomposés thermiquement, avec un mélange gazeux à une température de 20°C à 120°C, de préférence de 60° à 100°C, et pendant une durée de séjour moyenne de 10 s à 1.000 s, de préférence de 60 s à 600 s, et dans les homopolymères de propylène en forme de particules et/ou dans les copolymères de propylène en forme de particules la part absorbée des monomères insaturés éthyléniquement multifonctionnel s'élève à 0,01 à 10 % en masse, de préférence à 0,05 à 2 % en masse, par rapport aux homopolymères de propylène en forme de particules et/ou aux copolymères de propylène en forme de particules utilisés,
b) les homopolymères de propylène en forme de particules et/ou les copolymères de propylène en forme de particules, dans lesquels les monomères facilement volatiles et insaturés éthyléniquement multifonctionnel sont absorbés, ont été fondus dans une atmosphère de ce mélange gazeux dans des pétrisseuses ou dans des extrudeuses à fonctionnement en continu, de préférence dans des extrudeuses à vis double, à une température de 110°C à 210°C pendant une durée de séjour de 0,3 à 8,0 min,
c) la matière en fusion a été ensuite chauffée à une valeur de 220°C à 300°C pendant une durée de séjour de 0,3 à 7,0 min, des monomères non convertis facilement volatiles insaturés éthyléniquement multifonctionnel et les produits de décomposition étant enlevés, et
d) la matière en fusion a été mise en granulés de manière connue en soi, et avant l'étape de procédé a) et/ou d) et/ou avant ou pendant l'étape de procédé c), on peut ajouter le cas échéant comme autres additifs 0,01 à 2,5 % en masse de stabilisateurs, 0,1 à 1 % de masse d'antistatiques, 0,2 à 3 % en masse de pigments, 0,05 à 1 % en masse d'agent de nucléation, 5 à 40 % en masse d'agents de remplissage et/ou de renforcement, 2 à 20 % en masse d'agents anti-flammes et/ou 0,01 à 5 % en masse d'agents auxiliaires de traitement, par rapport à l'homopolymère de propylène et/ou au copolymère de propylène utilisé.

5. Procédé en continu pour réaliser des homopolymères de propylène modifiés et/ou des copolymères de propylène modifiés avec possibilité améliorée de mise en oeuvre selon la revendication 4, **caractérisé en ce que** le traitement avec le mélange gazeux s'effectue dans des mélangeurs de passage continu à titre d'absorbeurs de gaz et de solide continus.

6. Procédé en continu pour réaliser des homopolymères de propylène modifiés et/ou des copolymères de propylène modifiés avec possibilité améliorée de mise en oeuvre selon l'une ou l'autre des revendications 4 et 5, **caractérisé en ce que** la fusion des particules de polypropylène dans lesquels les monomères facilement volatiles insaturés éthyléniquement multifonctionnel et le cas échéant les acyle-peroxydes, alkyle-peroxydes, hydro-peroxydes, peroxy-carbonates et/ou peresters utilisés à titre de formateurs de radicaux thermiquement décomposés, s'effectue dans l'atmosphère du mélange gazeux dans des pétrisseuses ou des extrudeuses à fonctionnement continu, de préférence dans des extrudeuses à vis double.

7. Utilisation d'homopolymères de propylène modifiés et/ou de copolymères de propylène modifiés avec possibilité améliorée de mise en oeuvre selon l'une ou plusieurs des revendications 1 à 3, ainsi que de mélanges avec des homopolymères de propylène et/ou de copolymères de propylène habituels pour réaliser des feuilles, fibres, plaques, revêtements, tubes, corps creux et mousses.
